# EUROPÄISCHE PATENTANMELDUNG

(11) **EP 0 571 995 A2**
(43) Veröffentlichungstag der Anmeldung: **01.12.1993**
(21) Anmeldenummer: 93108554.2
(22) Anmeldetag: 27.05.1993
(51) Int. Cl.: F16D 3/72, F16D 3/50

(54) **Homokinetisches Gelenk**

(30) Priorität: 29.05.1992 DE 4217772
(71) Anmelder: AUDI AG, D-85002 Ingolstadt (DE)
(72) Erfinder: Schäfer, Frank, Dipl.-Ing., W-8070 Ingolstadt (DE); Vilsmeier, Walter, W-8091 Maitenbeth (DE); Breuer, Norbert, Dipl.-Ing., W-8071 Wettstetten (DE); Schindler, Manfred, W-8015 Markt Schwaben (DE)
(74) Vertreter: Le Vrang, Klaus

(57) **Zusammenfassung**

Die Erfindung betrifft ein homokinetisches Gelenk, zur Übertragung von Drehbewegungen mit hohen Drehzahlen und hohen Leistungen, insbesondere für Kraftfahrzeug, mit einem zwischen zwei Gelenkteilen (12,14) angeordneten und mit den Gelenkteilen in drehfester Verbindung stehenden, ein zentrales Ringloch aufweisenden Federbalg (16) und einer Innenzentrierung mit einem Kugelkopf (36), der in einer Führungshülse (38) angeordnet ist. Zur Vermeidung hoher Flächenpressungen ist der Kugelkopf (36) in einer Lagerbüchse (42) mit kalottenförmiger Innenkontur gelagert, wobei die Lagerbüchse (42) axial gleitbar in der Führungshülse (38) sitzt.

## Beschreibung

Die Erfindung betrifft ein vollkommen gleichförmig arbeitendes homokinetisches Gelenk, das nicht nur Drehbewegungen mit hohen Drehzahlen, sondern auch hohe Leistungen übertragen kann und sich deshalb insbesondere zur Leistungs- und Drehbewegungsübertragung im Kraftfahrzeugbau eignet.

Derartige Gelenke, wie z. B. die Bendix-, Rzeppa- oder Birfield-Gelenke, sind sehr kompliziert aufgebaut und damit herstellungsmäßig aufwendig und dementsprechend teuer.

Neben den homokinetischen Gelenken sind Gelenke bekannt, die nur annähernd gleichförmige Bewegungen übertragen. Diese Gelenke sind entweder ebenfalls kompliziert aufgebaut oder können nur relativ geringe Leistungen bei relativ niedrigen Drehzahlen übertragen. Insbesondere letzteres trifft auch auf sogenannte drehelastische Gelenke oder Drehkupplungen mit relativ großen Schwenkwinkeln zu, wie sie z. B. aus der DE-PS 12 86 831 bekannt sind. Die aus dieser Druckschrift bekannte, im wesentlichen aus einem Tellerfederpaket mit radial geschlitzten Tellerfedern aufgebaute elastische Kupplung soll zwar in Umfangsrichtung relativ steif sein, die Schlitze schwächen jedoch die Verbindung derart, daß weder hohe Drehzahlen noch große Kräfte übertragbar sind.

Darüber hinaus sind Miniatur-Metallbalg-Kupplungen bekannt, mit denen eine kraftschlüssige Wellen- und Nabenverbindung bei exakter Winkelübertragung erfolgen kann. Die Verbindung kann torsionssteif und spielfrei sein. Solche Metallbalg-Kupplungen eignen sich allenfalls für Potentiometer, Tachos, Impulsgeber und Drehgeber an Maschinen und Computern oder als Meß- und Zähleinrichtungen für Schrittmotore und kleine Servoantriebe. Hohe Drehzahlen bei großen Kräften können damit jedoch nicht bewältigt werden.

Aus der EP-B 254 802 ist eine hydropneumatische Federungsvorrichtung bekannt, die einen Federbalg aus hohlen Einzelsegmenten aus Metall aufweist. Die Einzelsegmente bestehen aus gegeneinander gesetzten, im Querschnitt nach außen konvex gewölbten, peripher miteinander verbundenen Ringscheiben, die mit zu einem zentralen Durchgang konzentrisch angeordneten Sicken versehen sind, wobei die Sicken benachbarter Einzelsegmente formschlüssig ineinander passen. Die Einzelsegmente sind angrenzend an den zentralen Durchgang miteinander verschweißt. Im Innern des Federbalgs wird im Betrieb der Federungsvorrichtung ein hydraulischer Druck aufgebaut, der zur Verformung bzw. zum Ausbeulen der Einzelsegmente führen kann. Dieser Verformung wirken die sich ineinanderlegenden Sicken benachbarter Einzelsegmente entgegen, so daß der Federbalg hochbelastbar ist. Aus der EP-B 182 828 ist bekannt, den Federbalg auch in Kreisbogenform zu verwenden, wobei der Durchgang nicht zentral angeordnet ist.

Die US-PS 1,871,227 beschreibt ein zwei Wellen miteinander verbindendes, homokinetisches Gelenk mit einem Federbalg und einer Innenzentrierung, die eine Führungshülse an dem einen Gelenkteil und einen in der Führungshülse sitzenden, einen Kugelkopf tragenden Zapfen am anderen Gelenkteil aufweist. Der Zapfen steht mit dem anderen Gelenkteil in fester Verbindung. Relativbewegungen der beiden durch das homokinetische Gelenk miteinander verbundenen Wellen in Längsachsrichtung sind ohne Bruchgefahr für den Federbalg nicht übertragbar. Außerdem würde bei der Übertragung von größeren Axialbewegungen die Innenzentrierung demontiert, d. h. der Kugelkopf könnte aus der Führungshülse rutschen.

Nach einem älteren Vorschlag der Anmelderinnen (P 41 11 724.7) ist bei einem homokinetischen Gelenk mit Innenzentrierung eine Längenausgleichseinrichtung vorgesehen. Diese Einrichtung für den axialen Längenausgleich soll die Übertragung von axialen Relativbewegungen zwischen den Gelenkteilen bzw. den Wellen auf den Federbalg verhindern, so daß letzterer nicht damit belastet wird. Gelöst wird dies durch eine teleskopartige, verdrehfeste Verbindung zwischen der einen Welle und dem mit dieser Welle verbundenen Gelenkteil sowie einem Gleitsitz des Kugelkopfes in der Führungshülse. Anstelle des Gleitsitzes des Kugelkopfes ist nach einem weiteren Vorschlag vorgesehen, daß der Kugelkopf in der Führungshülse axial festgesetzt ist und von einem mit der Welle fest verbundenen Führungszapfen durchgriffen wird, der in einer Bohrung des Kugelkopfes formschlüssig gleiten kann.

Aufgabe der Erfindung ist, bei einem homokinetischen Gelenk mit Innenzentrierung eine einfache Längenausgleichseinrichtung zu schaffen, die die Funktion des Gelenks nicht nachteilig beeinträchtigt und hohe Flächenpressungen in der Innenzentriereinrichtung vermeidet.

Diese Aufgabe wird durch die Merkmale des Anspruchs 1 gelöst. Vorteilhafte Weiterbildungen der Erfindung werden in den Unteransprüchen gekennzeichnet. Anhand der Zeichnung wird die Erfindung im folgenden beispielhaft näher erläutert. Es zeigen:

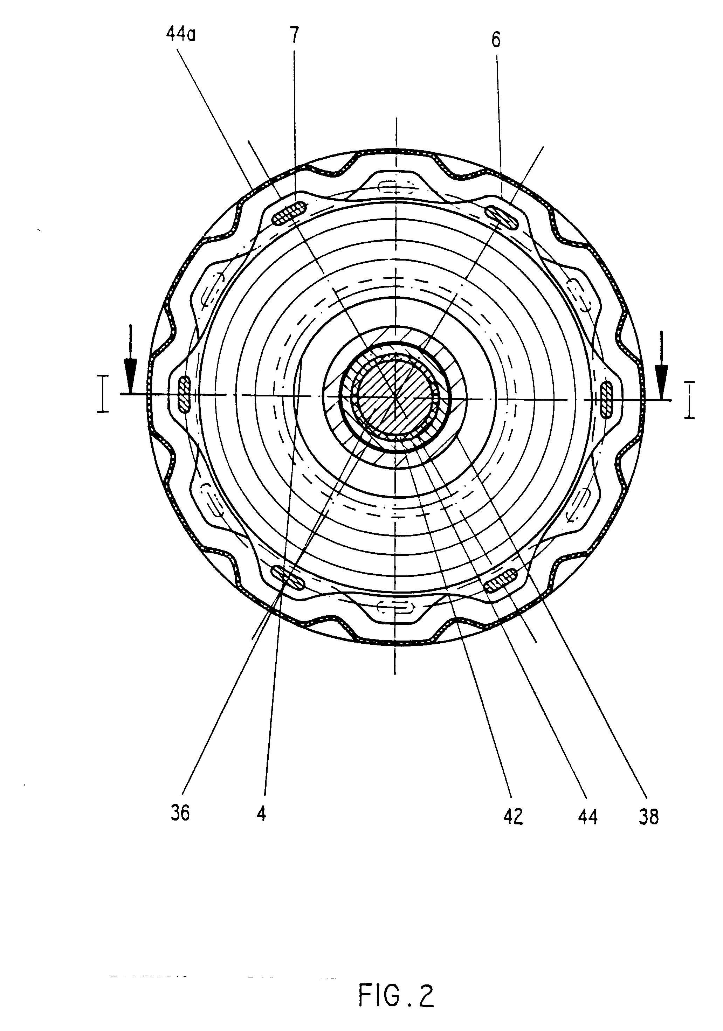

- Fig. 1: einen Längsschnitt durch das Gelenk entlang der Linie I-I in Fig. 2 mit Blickrichtung in Pfeilrichtung;
- Fig. 2: einen Querschnitt durch das Gelenk entlang der Linie II-II in Fig. 1 mit Blickrichtung in Pfeilrichtung;
- Fig. 3: einen Längsschnitt durch das Gelenk in einer abgewinkelten und zusammengedrückten Stellung;
- Fig. 4: einen Längsschnitt durch das Gelenk in einer abgewinkelten und gestreckten Stellung;
- Fig. 5: eine perspektivische Darstellung des Federbalgs mit einem Ausschnitt.

Das abgebildete Beispiel zeigt ein homokinetisches Antriebsgelenk 10 für ein Kraftfahrzeug. Es setzt sich im wesentlichen aus einem primären Gelenkteil 12 und einem sekundären Gelenkteil 14 zusammen, wobei zwischen den Gelenkteilen 12 und 14 ein Federbalg 16 angeordnet ist.

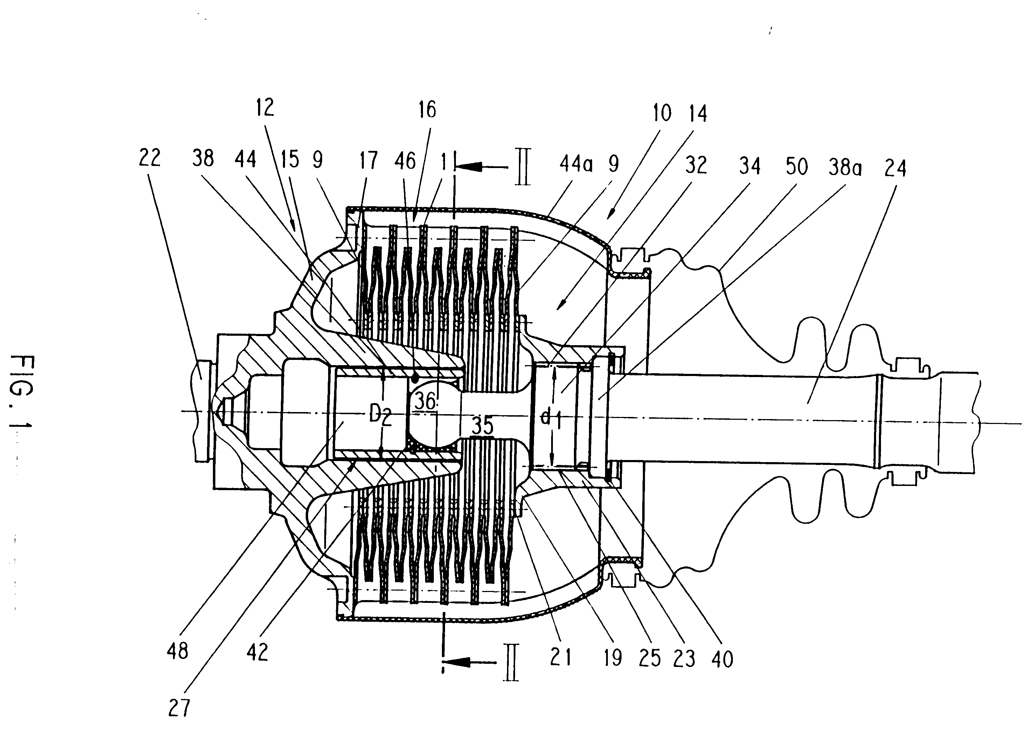

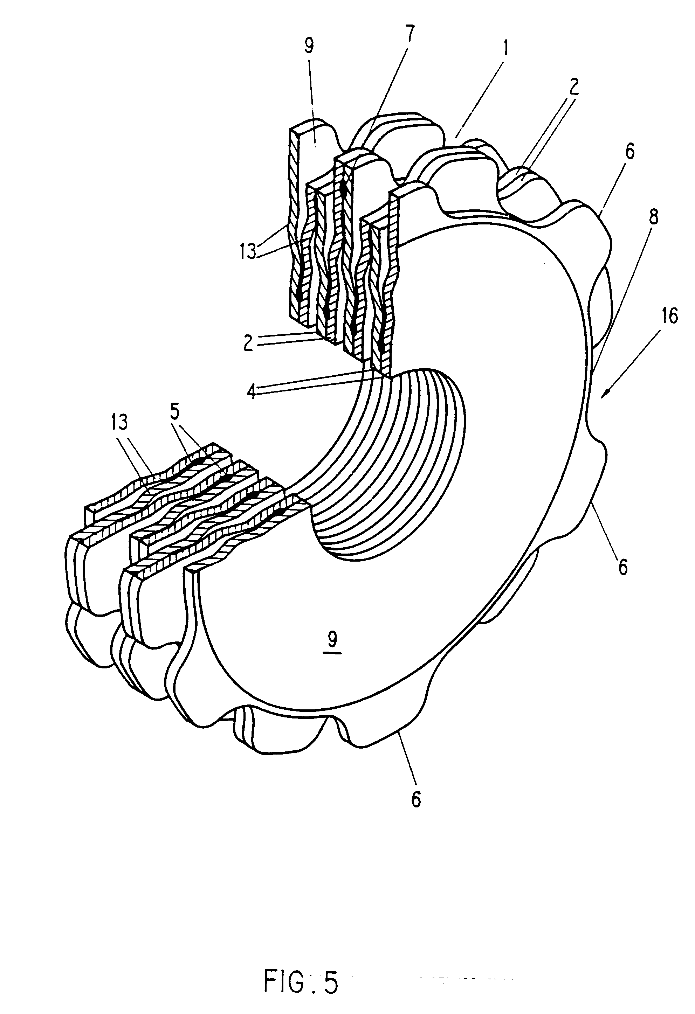

Der Federbalg 16 besteht aus mehreren, nebeneinander angeordneten ringförmigen Segmenten 1. Im dargestellten Beispiel (Fig. 1) sind etwa zehn Segmente 1 vorgesehen - wie Fig. 5 anhand von nur vier Segmenten 1 beispielhaft zeigt. Die ringförmigen Segmente 1 sind aus aneinandergesetzten Ringen 2 aufgebaut, die sich peripher berühren und von der Peripherie zum Ringloch 4 einen keilförmigen Spalt 3 bildend divergieren. Im Bereich des Ringlochs 4 sind benachbarte Segmente 1 durch z. B. Punktschweißungen 5 miteinander verbunden. Peripher weisen die Segmente 1 mehrere, sich radial nach außen erstreckende Vorsprünge 6 am Umfang verteilt auf. Im Bereich dieser Vorsprünge 6 sind die Ringe 2 miteinander z. B. durch Punktschweißungen 7 verbunden. Die Vorsprünge 6 benachbarter Segmente 1 sind - frontal betrachtet - verdreht zueinander angeordnet, so daß die Vorsprünge 6 des einen Segments 1 im Bereich einer Lücke 8 zwischen zwei Vorsprüngen 6 des benachbarten Segments 1 angeordnet sind.

Seitlich werden die Segmente 1 jeweils von einer Begrenzungsscheibe 9 begrenzt, wobei die Begrenzungsscheiben 9 die gleiche Raumform besitzen wie die Ringe 2 und demgemäß auch Vorsprünge 6 aufweisen. Die Begrenzungsscheiben 9 sind einerseits zur Welle 24 hin im Bereich des Ringlochs 4 und andererseits zur Welle 22 hin an den Vorsprüngen 6 über z. B. Punktschweißungen 5.7 mit dem angrenzenden Segment 1 verbunden.

Wesentlich ist, daß die Ringe 2 und zweckmäßigerweise auch die Begrenzungsscheiben 9 mehrere, zum Ringloch 4 konzentrisch angeordnete Sicken 13 aufweisen. Aus dieser Sickenanordnung resultiert ein im Querschnitt der Ringwandung betrachtet wellenförmiger Verlauf der Wandung. Die Sicken 13 benachbarter Ringe 2 bzw. benachbarter Begrenzungsscheiben 9 sind raumformmäßig gleich und gleichgerichtet, so daß sich in Achsrichtung des Federbalges 16 betrachtet benachbarte Sicken 13 formschlüssig ineinanderschmiegen können, wenn der Federbalg zusammengedrückt wird.

Das Ringloch 4 wird von einer vorzugsweise hohlzylindrischen Führungshülse 38 mit Spiel durchgriffen (Fig. 1), die einendig einen Ringflansch 15 aufweist, an den die Vorsprünge 6 der einen Begrenzungsscheibe 9 durch Punktschweißungen 17 befestigt sind. Der Faltenbalg 16 wird zweckmäßigerweise von einer ebenfalls am Ringflansch 15 befestigten Schutzkappe 44a mit radialem Abstand übergriffen. Im der Schutzkappe 44a gegenüberliegenden Flächenbereich des Ringflansches 15 ist die z. B. Getriebeausgangswelle 22 eines Kraftfahrzeugantriebs angeordnet. Der Ringflansch 15, die Führungshülse 38 und die Schutzkappe 44a sind die wesentlichen Bestandteile des primären Gelenkteils 12.

Das sekundäre Gelenkteil 14 weist einendig ebenfalls einen Ringflansch 19 auf, der einen kleineren Durchmesser als der Ringflansch 15 hat und der im Bereich des Randes des Ringloches 4 an der anderen Begrenzungsscheibe 9 z. B. mit Punktschweißungen 21 befestigt ist. An den Ringflansch 19 ist eine sich vom Federbalg 16 weg erstreckende hohlzylindrische Buchse 23 angesetzt, die im gestreckten unbelasteten Zustand des Gelenks 10 (Fig. 1) koaxial zur Führungshülse 38 angeordnet ist.

Die Buchse 23 steht mit einer Antriebswelle z. B. einer Kardanwelle 24 in drehfester Verbindung. Zweckmäßigerweise ist das Gelenkteil 14 über eine Steckverzahnung 32 mit der Antriebswelle 24 drehfest verbunden, wobei letztere einstückig über eine einen Zapfen bildende Verjüngung 35 den Kugelkopf 36 trägt. Zudem ist zwischen der Steckverzahnung und dem Wellenschaft ein Ringbund 38a vorgesehen, der in einer entsprechenden, ringzylindrischen Ausnehmung aufgenommen und über einen eingesprengten Federring 40 axial unverschiebbar gehalten ist.

Zweckmäßigerweise übergreift ein Teil der Schutzkappe 44a mit radialem Abstand die Buchse 23, wobei sich an der Schutzkappe 44a vorteilhafterweise eine axial dehnbare Abdeckmanschette 50 anschließt, die anderendig auf der Kardanwelle 24 sitzt und den Innenraum des Gelenks 10 vor Verschmutzungen schützt.

Im Innenraum 25 der Buchse 23 ist zentral, vor dem Ende der Kardanwelle 24, ein Führungszapfen 34 fest angeordnet, der auch einstückiger Bestandteil der Kardanwelle sein kann. Ein verjüngtes Stück 35 des Führungszapfens 34 ragt in den Innenraum 27 der Führungshülse 38 und endet mit einem zentrierenden Kugelkopf 36 im Innenraum 27.

Zweckmäßigerweise ist die Führungshülse 38 getriebeausgangswellenseitig verschlossen, so daß der Innenraum 27 von dieser Seite nicht verschmutzt werden kann.

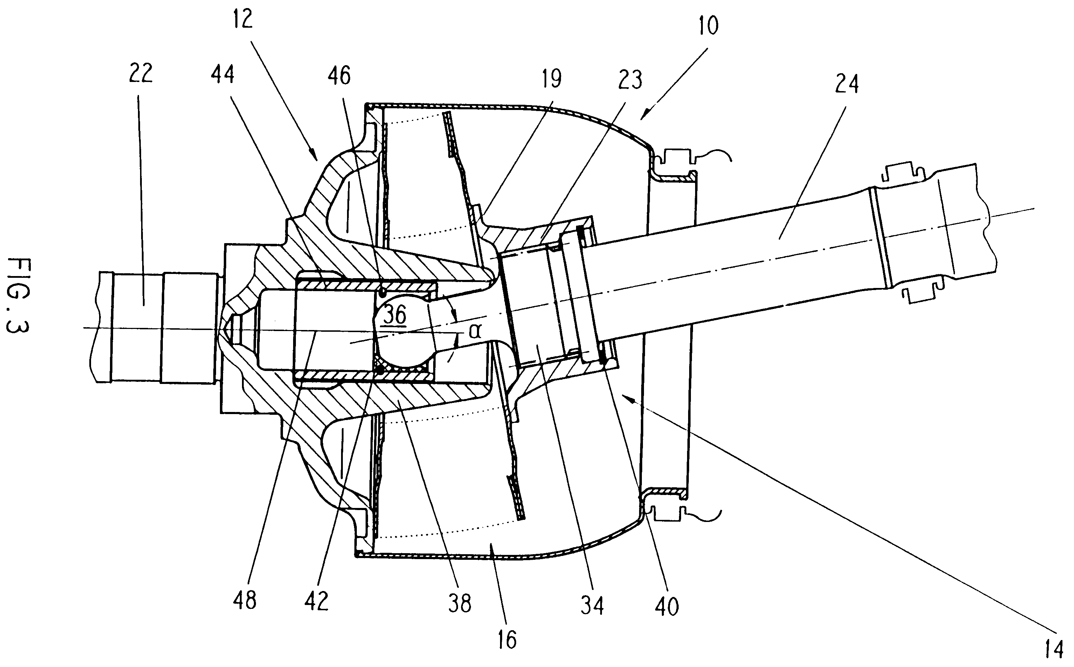

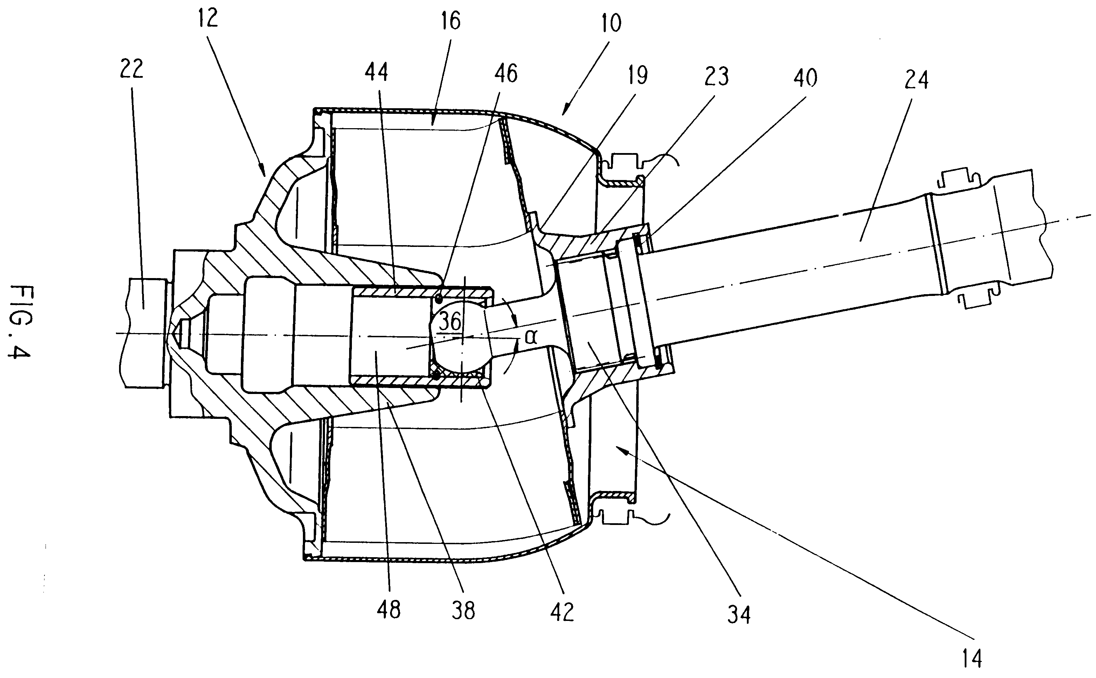

Aus dem Aufbau des Gelenks 10 ergibt sich, daß das sekundäre Gelenkteil 14, an dem der Flansch 19, die Buchse 23, der Führungszapfen 34 mit Kugelkopf 36 sowie die Kardanwelle 24 sitzen, gegenüber dem primären Gelenkteil 12 verwinkelt werden kann, wie der Winkel "α" in Fig. 3 und 4 verdeutlicht. Dabei wird der eine Teilbereich des Federbalgs 16 zusammengedrückt und der gegenüberliegende Teilbereich des Federbalgs 16 auseinandergezogen.

Da sich die Segmente 1 und die Begrenzungsscheiben 9 des Federbalgs 16 über die Sicken 13 abstützen können, wird eine Verdrehung (Torsion) der Federbalgteile untereinander verhindert, so daß sehr hohe Drehmomente, die z. B. von der Kardanwelle 24 auf den Federbalg 16 übertragen werden, ohne Verformung aufgenommen werden können, woraus das homokinetische Gelenk resultiert.

Die in Betrieb des Kraftfahrzeuges sich ergebenden Winkeländerungen zwischen der Getriebeausgangswelle 22 und der Kardanwelle 24 werden durch die elastische Verbiegung des Federbalgs 16 aufgenommen. Auftretende Längenänderungen zwischen Kardanwelle 24 und Getriebeausgleichswelle 22 werden über die Längenausgleichseinrichtung zwischen dem Kugelkopf 36 und der Führungshülse 38 ausgeglichen, wobei Längenänderungen auch auf den Federbalg 16 übertragen werden (vgl. Fig. 3 und 4). Dabei kann der Kugelkopf 36 indirekt im Innenraum 27 der Führungshülse 38 entsprechend mitgleiten. Über die Mittenzentrierung mittels des Kugelkopfes 36 in Verbindung mit der Führungshülse 38 an dem primären Gelenkteil 12 werden radiale Schwingungen und Verlagerungen abgestützt und somit eine definierte, durch den Mittelpunkt des Kugelkopfes 36 verlaufende Gelenkmittelachse sichergestellt. Das Antriebsmoment wird von der Getriebeausgangswelle 22 auf das primäre Gelenkteil 12, dann über den Federbalg 16 auf das sekundäre Gelenkteil 14 und damit auf die Kardanwelle 24 übertragen.

Für das indirekte Gleiten in der Führungshülse ist der Kugelkopf 36 in einer Lagerbüchse 42 mit kalottenförmiger Innenkontur spielfrei gelagert. Die Lagerbüchse 42 z. B. aus Kunststoff ist dabei in eine Gleithülse 44 z. B. aus Bronze eingeschoben und mittels eines eingesprengten Federrings 46 axial unverschiebbar gehalten. Dazu sind in der Lagerbüchse 42 und in der Gleithülse 44 entsprechende Nuten eingearbeitet. Die Gleithülse 44 wiederum ist in der zentrischen Bohrung 48 der an dem Gelenkteil 12 ausgebildeten Führungshülse 38 verschiebbar geführt. Das Gelenkteil 12 kann ggf. einstückig mit einer Welle 22 ausgeführt sein.

Die Vormontage des Antriebsgelenkes 10 umfaßt die Gelenkteile 12 und 14, die über den Federbalg 16 fest miteinander verbunden bzw. verschweißt sind. Ferner trägt das Antriebsgelenk 10 die Schutzkappe 44a, die beispielsweise mit dem Flansch 15 verschweißt sein kann.

Ebenfalls eine Vormontagegruppe bildet die Abtriebswelle 24 mit der Lagerbüchse 42 und der Gleithülse 44 sowie dem Gummibalg 50. Die so vormontierte Abtriebswelle 24 wird durch das nabenförmige Gelenkteil 14 hindurch mit der Gleithülse 44 in die zentrale Bohrung 27 der Führungshülse 38 eingeschoben und dann durch Einsprengen des Federringes 40 festgelegt. Dies ist möglich, weil der lichte Innendurchmesser d₁ des Gelenkteils 14 größer ist als der Außendurchmesser D₂ der Führungshülse 44. Anschließend wird der Gummibalg 50 mit der Schutzkappe 44a dicht verbunden.

Die Erfindung ist nicht auf das gezeigte Ausführungsbeispiel beschränkt. Beispielsweise könnte auch die Lagerbüchse 42 unmittelbar in der zentralen Bohrung 48 der Führungshülse 38 des Gelenkteiles 12 geführt sein.

Die sich durch die Sicken 13 ergebende Welligkeit der Segmente 1 wirkt einer Ausbeulung bei der Verwinkelung entgegen, gewährleistet größere axiale Wege wegen der radialen Streckbarkeit der Ringe 2 und ergibt eine weiche Biege-Federkennlinie des Federbalges 16 und garantiert die Formstabilität des Gelenks bei hohen Belastungen. Anstelle der Sicken 13 können auch andere ähnliche Formelemente, wie z. B. Kalotten, Wülste oder dergleichen, vorgesehen sein.

## Patentansprüche

1. Homokinetisches Gelenk zur Übertragung von Drehbewegungen mit hohen Drehzahlen und hohen Leistungen, insbesondere für die Drehbewegungs- und Leistungsübertragung in Kraftfahrzeugen, im wesentlichen bestehend aus
a) zwei im Abstand voneinander angeordneten Gelenkteilen, die jeweils mit einer von zwei miteinander zu verbindenden Wellen in drehfester Verbindung stehen;
b) einem zwischen den beiden Gelenkteilen angeordneten und mit den Gelenkteilen in drehfester Verbindung stehenden, ein zentrales Ringloch aufweisenden Federbalg;
c) einer Innenzentrierung im Federbalg, die eine wellenaxialausgerichtete, mit Spiel in das Ringloch ragende Führungshülse an dem einen Gelenkteil und einen wellenaxial ausgerichteten Zapfen mit Kugelkopf am anderen Gelenkteil aufweist, wobei der Kugelkopf in der Führungshülse sitzt,
dadurch **gekennzeichnet,** daß der Kugelkopf (36) in einer Lagerbüchse (42) mit kalottenförmiger Innenkontur spielfrei und drehbar gelagert ist, wobei die Lagerbüchse (42) axial gleitbar in der Führungshülse (38) sitzt.

2. Homokinetisches Gelenk nach Anspruch 1,
dadurch **gekennzeichnet,** daß die Lagerbüchse (42) fest in einer Gleithülse (44) angeordnet ist, die in einer zentrischen Bohrung (48) der Führungshülse (38) spielfrei verschiebbar geführt ist.

3. Homokinetisches Gelenk nach Anspruch 2,
dadurch **gekennzeichnet,** daß in der Lagerbüchse (42) und gegenüberliegend in der Gleithülse (44) mindestens eine Nut eingearbeitet ist, in der ein Federring (46) eingesprengt ist, der die Lagerbüchse (42) in der Gleithülse (44) axial unverschiebbar hält.

4. Homokinetisches Gelenk nach einem oder mehreren der Ansprüche 1 bis 3,
dadurch **gekennzeichnet,** daß die Lagerbüchse (42) aus Kunststoff besteht.

5. Homokinetisches Gelenk nach einem oder mehreren der Ansprüche 1 bis 4,
dadurch **gekennzeichnet,** daß die Gleithülse (44) aus Bronze besteht.

6. Homokinetisches Gelenk nach einem oder mehreren der Ansprüche 1 bis 5,
dadurch **gekennzeichnet,** daß die Führungshülse (38) einendig einen Ringflansch (15) aufweist, an dem eine Begrenzungsscheibe (9) des Faltenbalgs (16) befestigt ist.

7. Homokinetisches Gelenk nach Anspruch 6,
dadurch **gekennzeichnet,** daß das die Führungshülse (38) und den Ringflansch (15) aufweisende Gelenkteil (12) einstückig mit einer Welle (22) ausgebildet ist.

8. Homokinetisches Gelenk nach einem oder mehreren der Ansprüche 1 bis 7,
dadurch **gekennzeichnet,** daß das andere Gelenkteil (14) einendig ebenfalls einen Ringflansch (19) aufweist, der einen kleineren Durchmesser als der Ringflansch (15) hat und der im Bereich des Randes des Ringlochs (4) des Faltenbalgs (16) an einer Begrenzungsscheibe (9) des Faltenbalgs (16) befestigt ist, wobei an dem Ringflansch (19) eine sich vom Federbalg (16) weg erstrekkende hohlzylindrische Buchse (23) ausgebildet ist, die im gestreckten, unbelasteten Zustand des homokinetischen Gelenks (10) koaxial zur Führungshülse (38) angeordnet ist.

9. Homokinetisches Gelenk nach Anspruch 8,
dadurch **gekennzeichnet,** daß die Buchse (23) mit der anderen Welle (24) in drehfester Verbindung steht.

10. Homokinetisches Gelenk nach Anspruch 9,
dadurch **gekennzeichnet,** daß für die drehfeste Verbindung das Gelenkteil (14) über eine Steckverzahnung (32) mit der Welle (24) drehfest verbunden ist, wobei die Welle (24) einstückig über eine einen Zapfen bildende Verjüngung (35) den Kugelkopf (36) trägt.

11. Homokinetisches Gelenk nach Anspruch 10,
dadurch **gekennzeichnet,** daß zwischen der Steckverzahnung (32) und dem Schaft der Welle (24) ein Ringbund (38a) angeordnet ist, der in einer entsprechenden ringzylindrischen Ausnehmung in der Buchse (23) aufgenommen und über einen eingesprengten Federring (40) axial unverschiebbar gehalten ist.

12. Homokinetisches Gelenk nach einem oder mehreren der Ansprüche 1 bis 11,
dadurch **gekennzeichnet,** daß der Faltenbalg (16) von einer am Ringflansch (15) befestigten Schutzkappe (44a) mit radialem Abstand übergriffen wird, wobei ein Teil der Schutzkappe (44a) mit radialem Abstand auch die Buchse (23) übergreift.

13. Homokinetisches Gelenk nach Anspruch 12,
dadurch **gekennzeichnet,** daß sich zur Welle (24) hin an die Schutzkappe (44a) eine axial dehnbare Abdeckmanschette (50) anschließt, die auf der Welle (24) sitzt.

14. Homokinetisches Gelenk nach einem oder mehreren der Ansprüche 1 bis 13,
dadurch **gekennzeichnet,** daß im Innenraum (25) der Buchse (23) ein Führungszapfen (34) fest angeordnet ist, der einstückiger Bestandteil der Welle (24) ist, wobei ein verjüngtes Stück (35) des Führungszapfens (34) in den Innenraum (27) der Führungshülse (38) ragt und mit dem zentrierenden Kugelkopf (36) endet.

15. Homokinetisches Gelenk nach einem oder mehreren der vorhergehenden Ansprüche,
dadurch **gekennzeichnet,** daß die Begrenzungsscheiben (9) des Federbalges (16) einerseits zur Welle (24) hin im Bereich des Ringlochs (4) und andererseits zur Welle (22) hin an den Vorsprüngen (6) über Punktschweißungen (11) mit dem angrenzenden Segment verbunden sind.
